# EUROPEAN PATENT APPLICATION

(11) **EP 0 583 883 A2**
(43) Date of publication of application: **23.02.1994**
(21) Application number: 93305590.7
(22) Date of filing: 16.07.1993
(51) Int. Cl.: B60R 16/02, H01R 31/02, H02G 3/18

(54) **Improvements in and relating to junction boxes**

(30) Priority: 17.07.1992 GB 9215220; 02.09.1992 GB 9218584
(71) Applicant: FLEXIBLE LAMPS LIMITED, Epping, Essex CM16 4JJ (GB)
(72) Inventor: Walton, Trevor, Hatefield Heath Hertfordshire (GB)
(74) Representative: Cummings, Sean Patrick

(57) **Abstract**

A junction box comprises a base having a pair of upstanding end walls and a pair of longitudinal side walls (13) and (14). Each of the end walls and side walls are provided with, at its upper end, a peripheral channel 16 which is configured in at least in part thereof with a projection (17) to define a recess (18) on the underside thereof. The box is provided with a closure (20) which is adapted to over-lay the top opening of the junction box and is provided with a peripheral lip (21) which is adapted to enter recess (16). Recess (16) is adapted to receive a gasket and the longitudinal edges of the closure (20) are provided each with a pair of spaced hinged clips (26), each clip being hinged to closure (20) by means of plastic hinge (27) and provided at an extremity with a detant portion (28) and a finger portion (29), the arrangement being such that when applying pressure to finger portion (29). The base of the box accommodates a terminal support board which comprises a plurality of copper strips (31) arranged in spaced parallel relationship to the terminal board. Each copper strip (31) comprises a longitudinal body portion (41) having a plurality of spade terminal portions (42) extending laterally from one longitudinal edge thereof.

## Description

This invention relates to a junction box and has particular reference to junction boxes for use on vehicles typically road vehicles.

Until comparatively recently, the principal junction box on a road vehicle has been a fuse box which contains a number of fuses usually arranged in a spaced linear manner with appropriate take-offs for the electrical supplies to various components of the vehicle, such, for example, as wind-screen wipers, heaters, lights, interior lighting, trailers where appropriate and so on. These fuse boxes have a limited number of connectors to each fuse, possibly allowing two or at most three cables to be taken from each junction.

When a vehicle body builder wishes to adapt a vehicle for different use and to supply another power take-off, it is frequently the case that because of the restricted number of take-off points on the vehicle fuse box, connections are frequently made which by-pass the fusing system completely, thus increasing a risk of fire in the event of a major electrical fault. While the initial body builder of a vehicle may well take all necessary electrical precautions and follow good wiring practice in the event of subsequent adaption or modification, it is extremely difficult to break into the vehicle electrical system for additional power supplies in a manner which is electrically safe, that is to say, which does not overload the existing cabling of the system.

Junctions in typical cable looms supplied with and for motor vehicles are usually effected by means of torpedo type connectors which comprise a torpedo or bullet, soldered or otherwise attached to a wire which engages with a tubular element which latter can be configured as either a two-point, four-point or multi-point connector. The bullet is pushed into the cylindrical part where it forms electrical contact with the cylinder which then provides further electrical contact with a second bullet connector entered to another end of the tube or connector, thereby effecting the electrical connection. A single piece of metal can be shaped to form two contiguous tubular parts, thereby enabling a three way connection to be made with one piece of wire. In this way connections within vehicle cable looms can be built up to enable the connection of multiple components such, for example, as lamps to a single line supply.

This works well in a vehicle with a limited number of electrical components. It suffers from the disadvantage that it is costly to assemble and furthermore, there is no easy foolproof way of assembly, with a result that misconnections can frequently take a considerable period of time to track down and correct.

In order to overcome these disadvantages, it has recently become the practice to provide a molded junction box having a plurality of laterally spaced connector strips physically molded into the base thereof, each connector strip comprising a plurality of upstanding spade portions each adapted to receive a female mating connector to effect the electrical connections therebetween. Such junction boxes are provided with a plurality of openings in the end walls thereof to allow the admission of cables and these are closed by grommets which are adapted to effect a seal between the edges of the opening in the wall and the cables accommodated thereby.

The disadvantage of the junction boxes of this type are that while they are set to ready adaption, there is no means for controlling the wiring on assembly and in consequence, a considerable amount of time is expended checking the right wires go to the right connectors.

The present invention seeks to overcome this disadvantage by providing a separate terminal board for a vehicle junction box of the kind described, which terminal board comprises a plurality of connector strips arranged in spaced parallel relationship over a board, each strip having a plurality of connection terminal means disposed at spaced intervals along its length and wherein the board is arranged to support each of said strips in spaced relationship one with the other and in electrical isolation from each other, said board being adapted to be secured within a terminal box.

In a particular aspect of the present invention one or more cover plates may be provided for the board, each cover plate being spaced outwardly of the upper surface of the support board so that each outwardly projecting spade terminal is recessed within and behind said cover plate, the extent of the projections of each terminal from the upper surface being adjustable at will. Each cover plate may be contoured to permit terminal blocks of different configurations to be received thereon and may be arranged in such a way that a given set of terminal connections can only be connected into the junction box in a given manner.

The present invention therefore provides a junction box assembly which makes provisions for multiple take-off points within the junction box thereby enabling the take-off of additional power supplies subsequent to the body building of the vehicle without breaking into the existing wiring system of the vehicle itself.

Each strip may be formed of copper and is provided with a plurality of longitudinally spaced spade terminal portions extending laterally of a longitudinal edge of the strip. The terminal portions are preferably uniformly spaced along the strip and each terminal portion of the strip is identical with the others. The strips are preferably configured to be stamped out from copper sheet in a staggered inverted array thereby resulting in the saving of considerable amounts of copper during the stamping out process thus avoiding a considerable quantity of waste. In the particular embodiment of the present invention, the strips may be stamped from a single sheet of copper by means of a stamp in which the connectors of a first strip are interposed in the spaces between the connectors of the second thereby reducing the waste material generated in production to an absolute minimum.

The support board may comprise a base piece formed of plastics material comprising a substantially planar base with a plurality of longitudinal slots disposed in an array across the surface. The underside of the support board is slotted to receive the body of the connecting strip. Each strip is entered into the support board with the spade terminal portions projecting through the slots in an upper surface thereof, while the body of the strip is supported between two plastic flanges which serve to insulate the copper strip and maintain insulation of the copper strip against possible damage in service.

In a further aspect of the present invention, one or more cover plates may be provided for the strip, each cover plate being spaced upward of the upper surface of the support board so that from the upper surface of the cover plate, each upwardly projecting spade terminal is substantially recessed within and behind the cover plate. The extent of projection of each terminal from the upper surface of the cover plate is a matter of choice for each manufacturer and this can be adjusted by simply adjusting the spacing between each cover plate as may be necessary.

The terminal connections carried by the wire may be industry standard female spade connectors, each adapted to slidingly connect with a spade portion of a connecting strip.

The cover plates may be provided with a selection of slots which are configured to receive shaped terminal blocks in a given relationship. Cables or groups of cables can be connected to shaped cable blocks which accommodate a group of connectors in a specific configuration and which are capable of fitting only one shape within the cover plate, thus preventing improper connection of the various cable arrays. If a vehicle body builder requires access to additional terminal slots, he can either modify the cover plate by simply cutting the plate to gain access for additional groups of terminals in another shaped-block or can use industry standard spade terminal connections without adaption, or can obtain a new cover plate preconfigured for the additional connections required.

In addition, the upper surface of the board and/or cover plate may be colour coded for ease of identification of the positioning of the cooperating cable wiring blocks.

The man skilled in the art will appreciate that where a large number of connections to one particular cable supply is required, then groups of terminals can be inter-connected by hard-wiring between terminal strips carried by said board or other means to provide an additional number of terminal connections. Furthermore, where the spacing of the terminals within groups is not convenient, hard-wiring between remotely spaced terminal groups can allow the appropriate connections to groups of connectors. The term "hard-wiring" is understood to mean a non-releasable connection.

The present invention also includes a junction box incorporating a terminal board, such a box comprises a base having the terminal board secured thereto, a pair of longitudinal side walls, a pair of transverse end walls and a lid, which latter is adapted to be releasably secured to the walls of the box, wherein each of the end walls and side walls may be provided with a peripheral channel accommodating sealing means effective between the lid and the junction box to prevent entry of moisture thereinto. The lid may be provided along an edge and a plurality of spaced clips or flanges which are hinged to the lid are provided with snap under function whereby a detant on the hinged flap is adapted to snap over a projection on the adjacent wall and engage in a recess thereby serving to draw the lid into clamping engagement with said junction box.

In another aspect of the present invention, there is provided a cable entry gland for, inter alia, a junction box which gland comprises a body portion adapted to receive a cable as a sliding fit therein, a gasket member adapted to fit about said cable and to abut an end of said body,
and gasket clamping means adapted to engage said body and clamp said gasket means against said cable to provide a seal therebetween,
wherein said other end of the body is configured with a flange and a mating portion adapted to cooperate with a corresponding portion in a wall surface defining the cable entry, said other end portion and said mating portion including a cylindrical tubular part having spaced bayonet slots therein each adapted to engage with a corresponding projection on said other portion or surface, the arrangement being such that on assembly, an annular gasket is interposed between said flange and said mating portion and the body is entered to engage the slots with said projections sufficiently to compress said gasket whereupon the body is twisted to engage a circumferential part of each slot with a projection to retain the body in engagement with the cable entry for maintaining said gasket under compression to effect a seal.

In a particular embodiment of the present invention, the "bayonet" slots may be diametrically opposed and of sufficient dimension to accommodate an assembly cable connecting block thereby permitting pre-assembly of the blocks and gland on the wiring loan prior to installation on a vehicle.

The advantage of this arrangement is to provide ready and rapid connection of the cable entry gland to a cable entry and also to provide ready release of the gland without disturbing the loading of the gland without the wire itself. Reconnection at the most requires provision of a new gasket between the flanges and the corresponding mating part on the cable entry so that reconnection enables the refitting of a tight connection. Clearly, the present invention also provides the provision of blanking fittings with a bayonet type operation in accordance with the invention. The slots may be provided on the gland body and the projection on the cable entry surface or vice versa.

The material of the junction box in accordance with the present invention may be made of high density polyethylene or polypropylene and the support pieces and cover plates for the terminal board can be made of similar material.

Following is a description by way of example only and with reference to the accompanying informal drawings of methods of carrying the invention into effect.

In the drawings:-

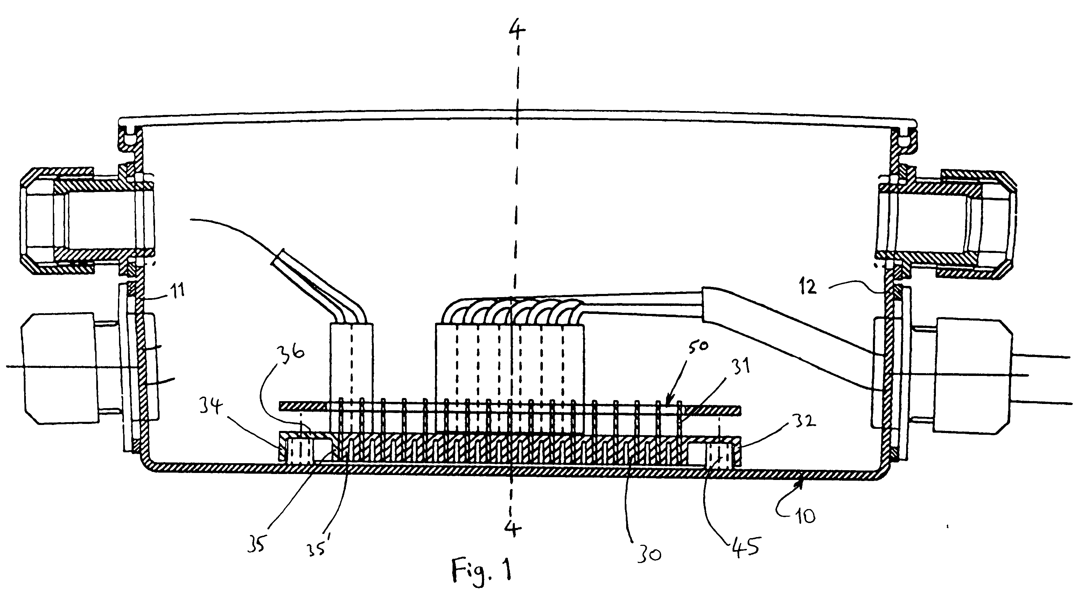

Figure 1 is a longitudinal section through a junction box in accordance with the present invention.

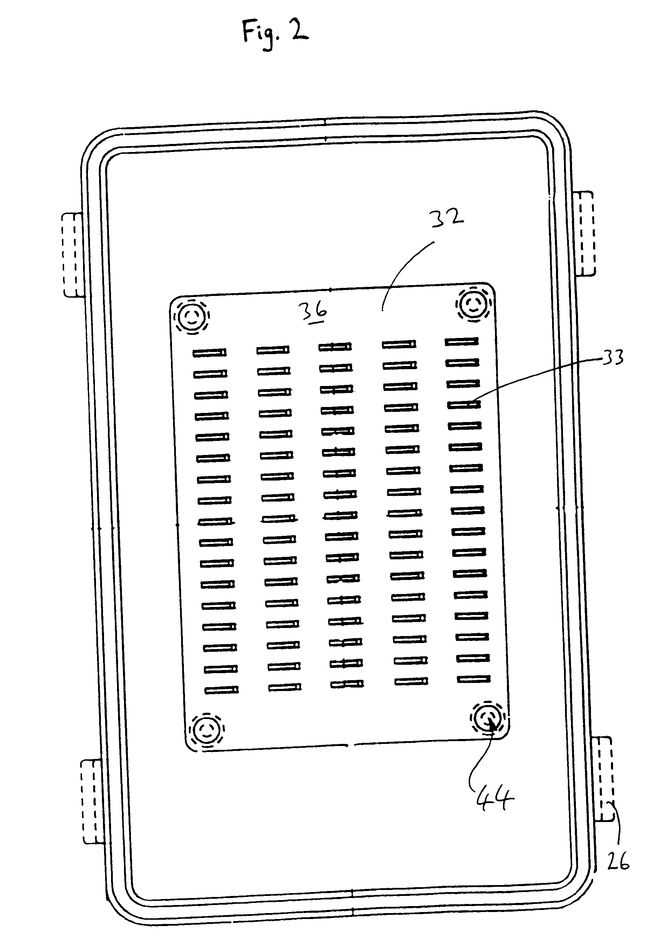

Figure 2 is a plan view of the box of Figure 1 with the lid removed.

Figure 3 is an end view of the box of Figure 1.

Figure 4 is a section along the lines 4-4 of Figure 1.

Figure 5 is a detail in section of the support board of Figure 1.

Figures 6 and 7 are details of the support board.

Figure 8 is a detail of the seal of Figure 4.

Figures 9, 10 and 11 are side views, some partly in section of a gland seal.

Figure 12 is a detail of the terminal board in Figure 1.

Figure 13 is a cross-section showing the use of cover plates for use in conjunction with the board shown in Figure 2.

Figures 14 and 15 are views of different cover plates for use in conjunction with the terminal board of the invention.

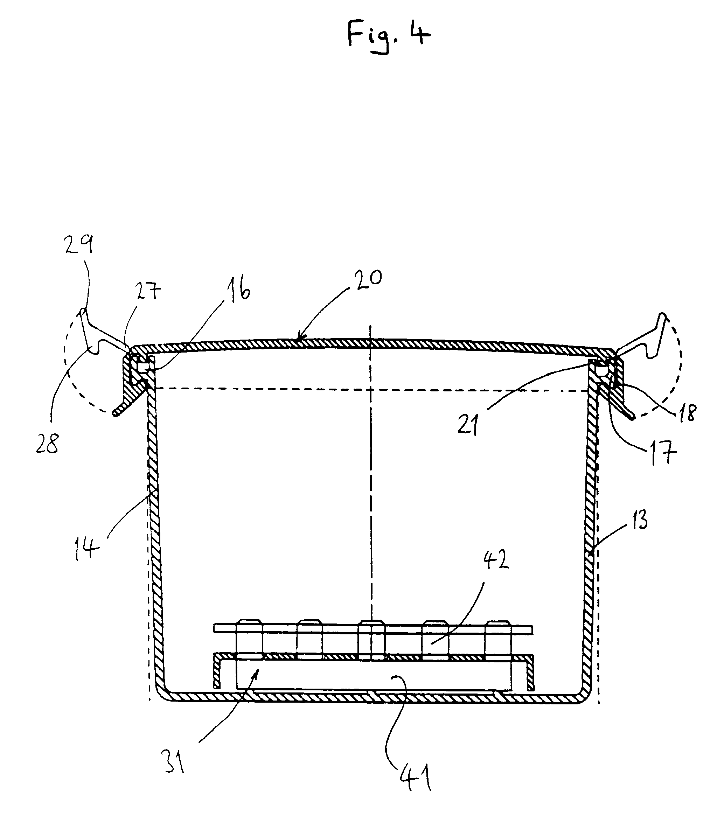

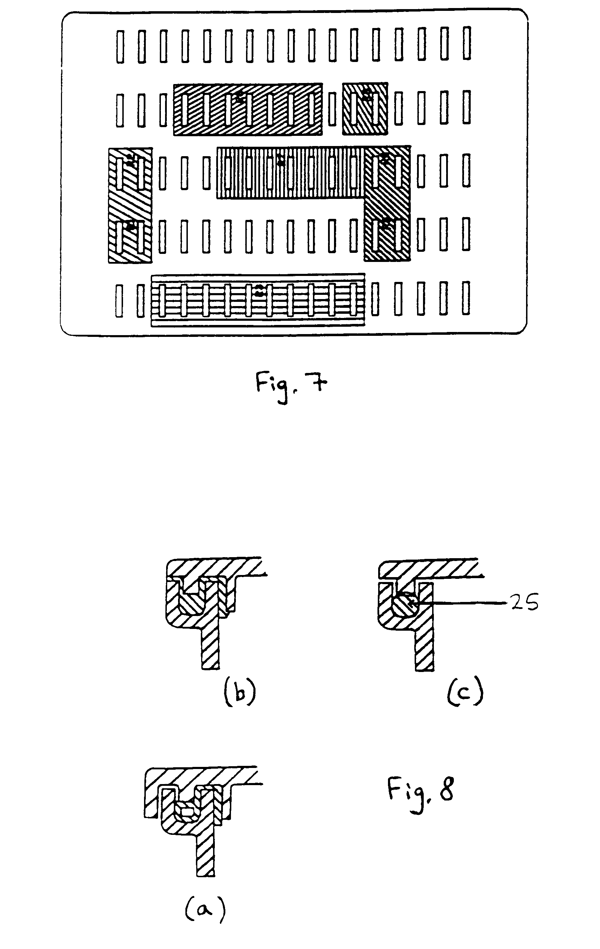

A junction box in accordance with the present invention comprises a base 10 having a pair of upstanding end walls 11 and 12 and a pair of longitudinal side walls 13 and 14. Each of the end walls and side walls 11 to 14 are provided with, at its upper end, a peripheral channel 16 which is configured in at least in part thereof with a projection 17 to define a recess 18 on the underside thereof, see Figure 4. The box is provided with a closure 20 which is adapted to over-lay the top opening of the junction box and is provided with a peripheral lip 21 which is adapted to enter recess 16. Recess 16 is adapted to receive a gasket 25 (figure 8) and the longitudinal edges of the closure 20 are provided each with a pair of spaced hinged clips 26, each clip being hinged to closure 20 by means of plastic hinge 27 and provided at an extremity with a detant portion 28 and a finger portion 29, the arrangement being such that when applying pressure to finger portion 29, datent 28 engages and snaps over abutment 17 to engage within recess 18, thereby drawing projection 21 firmly into recess 16 to clamp the gasket 25, thereby forming an effective seal between the periphery of the closure 20 and the box.

The base of the box accommodates a terminal support board indicated generally at 30 which comprises a plurality of copper strips 31 arranged in spaced parallel relationship to terminal board 32. Each strip 31 is supported by terminal board 32, which latter is substantially rectangular and has a plurality of longitudinal slots 33 extending laterally of the board, to define an array of slots which in the particular embodiment of the present invention is an array of 5 by 17. The board 30 is provided with a peripheral flange 34 and a plurality of depending flanges 35, 35' extending downwardly from an upper surface 36. The flange 34 serves to space the planar surface 36 upwardly of the space 10 of the junction box while depending flanges 35, 35' extend on either side of strip 31, to support and locate the same.

Each copper strip 31 comprises a longitudinal body portion 41 having a plurality of spade terminal portions 42 extending laterally from one longitudinal edge thereof. Each strip 31 is arranged with the longitudinal portion 41 disposed between each of flanges 35, 35' and with each of spade terminal portions 42 projecting through corresponding slots 33 in surface 36 of board 32.

Board 32 is secured to the junction box body by means of fixings or fastenings passing through each corner of the board at 44 to engage with an upstanding projection 45 suitably provided from the base 10 of the junction box. The fastenings may include spacing means (not shown) to carry a cover portion 50.

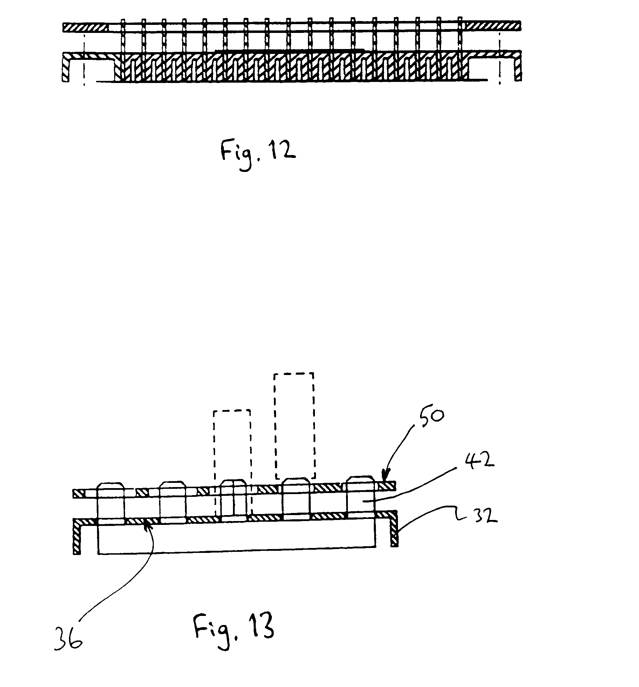

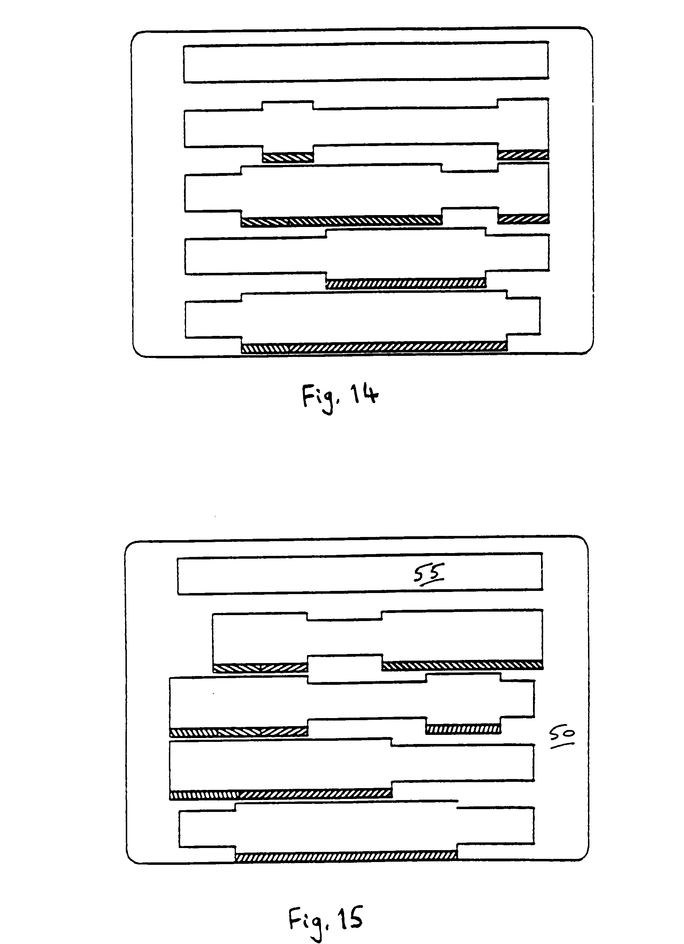

Referring to Figure 13, the cover portion comprises a series of configured slots in a plastic sheet which, when assembled, is spaced upwardly of the surface 36 of board 32 so that the bulk of each of terminals 42 is recessed with respect to openings 55 in cover 50. Figures 14 and 15 each respectively show different cover sheets, and the man skilled in the art will appreciate that by providing shaped terminal blocks containing groups of industry standard female spade connectors to engage with the connectors 42, by providing cooperating shapes on the cover plate in the appropriate location, correct connection on assembly can be assured.

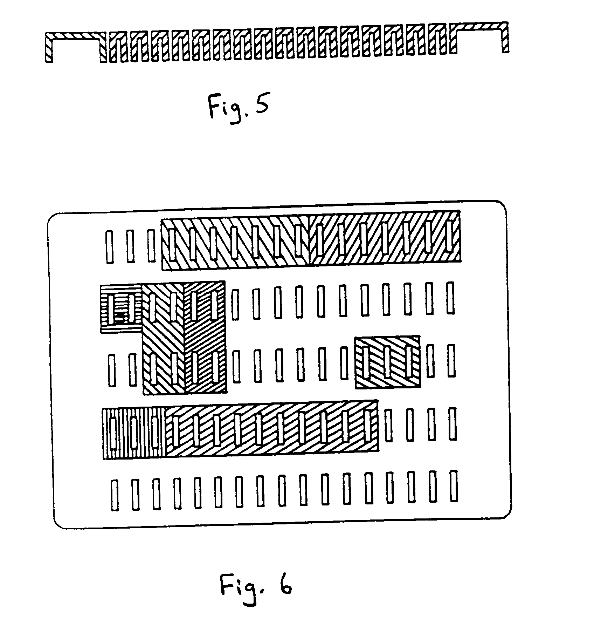

To aid identification on an assembly line, the surface of the cover plate may be colour-coded so that cable connector blocks of a given colour are matched with the corresponding colour on the cover plate. The shaded areas on figures 6 and 7, and figures 14 and 15 represent examples of colour-coded areas on the plate and board respectively.

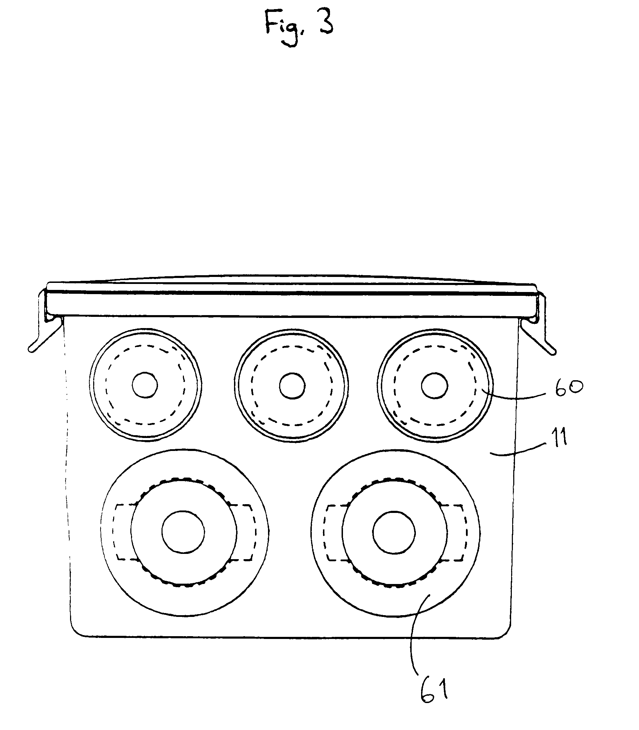

Each of the end walls 11 and 12 of the junction box in accordance with the invention is provided with a plurality of cable entries, in this particular example, three small ones 60 and two large ones 61 (figure 3).

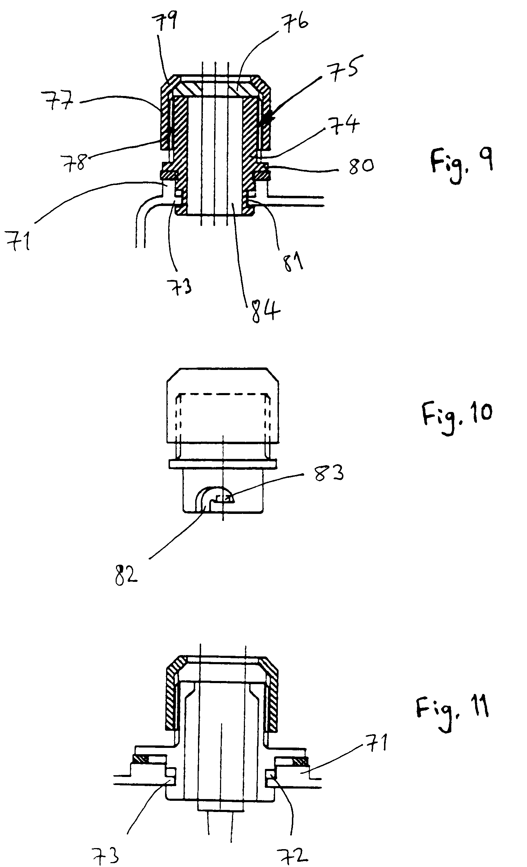

A further aspect of the present invention provides for a cable gland assembly which permits quick release of gland assembly and withdrawal of the cables and the substitution of new ones without need to dissemble the gland assembly itself (figures 9, 10 and 11). Cable entry in the junction box is configured to provide an annular upstanding part 71 which serves to define an entry recess 72 having a pair of opposed lugs 73 projecting therefrom. In this particular embodiment, the lugs 73 are diametrically opposed, although it is not necessary that this should be so since off-setting of the lugs and the use of more than 2 lugs is possible to provide a coding for the gland entry thereby once again providing a safeguard against incorrect assembly. The gland itself comprises a generally tubular body portion 74 which is threaded towards one end thereof 75 in its outer surface. A cable is entered through tubular body 74 and a packing gasket 76 is applied at a first end which gasket is a tight fit upon a cable passing body 74. A gland cover 77 having a generally tubular body threaded on its internal surface 78 and having a frustoconical portion 79 is entered over the body 74 and is screwed into place to draw the frustoconical portion 79 into gasket squeezing engagement with gasket 76 thereby urging the inner walls of gasket 76 tightly into engagement with the external surface of the cable passing through body 74, thus effecting a seal between the outer surface of the cable and the body 74.

Body 74 is provided towards its other end with an annular flange 80 and towards its lower end with a pair of opposed bayonet slots 81 which may be either through slots or partial surface slots as the case may be. Each bayonet slot comprises an axially aligned portion 82, and a circumferential portion 83.

In the particular embodiment, the bayonet slots 82, 83 are of a dimension sufficient to allow passage through the opening of an assembled cable end connector, thus allowing a ready interchange or assembly of the wiring.

On assembly of the gland to the cable entry, a gasket 84 is entered between the flange and the upstanding part 71 and the gland body 74 is urged downwardly to enter each of slots 81 with projection 73 so that further downward urging of the body 74 towards the entry results in compression of the gasket 84 with the entry of the projection 73 into the axial portion 82 of slot 81 until the projection is located in a position in slot 81 such that twisting of the gland permits each projection 73 to be entered into the circumferential portion 83, thereby serving to retain the gland in the cable entry while at the same time maintaining the gasket 84 under compression thus effecting a seal between body 74 of the gland and the cable entry. It will be appreciated that in order to release the gland, all that is needed is to apply axial pressure to the gland body 74 and to twist sufficiently to move projection 73 into the axial portion 82 of the slot 81 and then withdraw the gland from the cable entry.

Junction boxes in accordance with the present invention as described above have been found to have considerable advantage since they readily permit further electrical connections to be made within a junction box without it disturbing, to any significant extent, the existing wiring of the vehicle. A further advantage is that the snap over lid provides a well sealed, yet easy access to the junction box while the plurality of cable entries with their quick release gland packing arrangements allow for either ready substitution of a new cable or indeed the introduction of new cable into an unused gland entry. Where gland entries to the junction box are unused, it will be appreciated by the man skilled in the art that a blanking cable gland can be employed together with its associated gasket 84 simply to seal the unused cable entry until such time as future use is required.

## Claims

1. A board assembly for a junction box which assembly comprises a plurality of connector strips arranged in spaced relationship over a board, each strip having a plurality of terminal means disposed at spaced intervals along its length; the board being arranged to support each of said strips in spaced relationship one with the other and in electrical isolation from each other, and fixing means for securing said board within a terminal box.

2. A junction box assembly comprising a base having secured thereto a terminal board assembly as claimed in claim 1, a pair of longitudinal side walls, a pair of transverse end walls, closure means and means for releasably securing the latter to the walls of the box, characterised in that each of the end walls and side walls is provided with a peripheral channel accommodating sealing means effective between the closure means and the junction box to prevent entry of moisture thereinto.

3. An assembly as claimed in claim 1 or claim 2, which assembly comprises one or more cover plates each cover plate being spaced from the upper surface of the support board so that each terminal is recessed within and behind said cover plate, the arrangement being such that the extent of the projections of each terminal from the upper surface is adjustable by adjusting said spacing between each cover plate and the support board.

4. An assembly as claimed in claim 3, wherein each cover plate is contoured to permit terminal blocks of different configurations to be received thereon and is arranged in such a way that a given set of terminal connections can only be connected into the junction box in a given manner.

5. An assembly as claimed in any preceding claim which assembly comprises multiple take-off points within the junction box thereby enabling the take-off of additional power supplies.

6. An assembly as claimed in any preceding claim wherein each connector strip is formed of copper and is provided with a plurality of longitudinally spaced spade terminal portions extending laterally of a longitudinally edge of the strip.

7. An assembly as claimed in claim 6, wherein the terminal portions are uniformly spaced along the strip and each terminal portion of the strip is identical with the others.

8. An assembly as claimed in any preceding claim wherein the connector strips are configured to be stamped out from copper sheet in a staggered inverted array.

9. An assembly as claimed in claim 8, wherein the strips are stamped from a single sheet of copper by means of a stamp in which the connectors of a first strip are interposed in the spaces between the connectors of the second.

10. An assembly as claimed in any preceding claim wherein the board comprises a base piece or support board formed of plastics material comprising a substantially planar base with a plurality of longitudinal slots disposed in an array across the surface.

11. An assembly as claimed in claim 10, wherein the underside of the support board is slotted to receive the body of the connecting strip.

12. An assembly as claimed in any one of claims 6 to 11, wherein each strip is entered into the support board with the spade terminal portions projecting through the slots in an upper surface thereof, while the body of the strip is supported between two plastic flanges.

13. An assembly as claimed in any preceding claim, wherein one or more cover plates is provided for each strip, each cover plate being spaced upward of the upper surface of the support board so that from the upper surface of the cover plate, each upwardly projecting spade terminal is substantially recessed within and below the cover plate.

14. An assembly as claimed in claim 13, wherein the extent of projection of each terminal from the upper surface of the cover plate is adjusted by adjusting the spacing between each cover plate as may be necessary.

15. An assembly as claimed in any preceding claim, wherein the terminal connections carried by the wire are industry standard female spade connectors, each adapted to slidingly connect with a spade portion of a connecting strip.

16. An assembly as claimed in any of claims 4 to 15, wherein the cover plates are provided with a selection of slots which are configured to receive shaped terminal blocks in a given relationship.

17. An assembly as claimed in claim 16, wherein cables or groups of cables are connected to shaped cable blocks which accommodate a group of connectors in a specific configuration and which are capable of fitting only one shape within the cover plate.

18. An assembly as claimed in any of claims 4 to 17, wherein the upper surface of the board and/or cover plate is colour-coded.

19. An assembly as claimed in any of claims 4 to 18, wherein groups of terminals are inter-connected by wiring between terminal strips carried by said board or other means to provide an additional number of terminal connections for a given circuit or supply.

20. An assembly as claimed in claim 19, wherein the inter connection between terminal groups is formed by hard-wiring.

21. An assembly as claimed in any of claims 2 to 20, wherein the closure means is provided along an edge and a plurality of spaced clips or flanges which are hinged to the closure means are provided with snap under function whereby a detant on the hinged flap is adapted to snap over a projection on the adjacent wall and engage in a recess thereby serving to draw the closure means into clamping engagement with said junction box.

22. A cable entry gland assembly for a junction box as claimed in any one of claims 2 to 21, which gland assembly comprises a body portion adapted to receive a cable as a sliding fit therein, a gasket member adapted to fit about said cable and to abut an end of said body,
and gasket clamping means adapted to engage said body and clamp said gasket means against said cable to provide a seal therebetween,
wherein said other end of the body is configured with a flange and a mating portion adapted to cooperate with a corresponding portion in a wall surface defining the cable entry, said other end portion and said mating portion including a cylindrical tubular part having spaced bayonet slots therein each adapted to engage with a corresponding projection on said other portion or surface, the arrangement being such that on assembly, an annular gasket is interposed between said flange and said mating portion and the body is entered to engage the slots with said projections sufficiently to compress said gasket whereupon the body is twisted to engage a circumferential part of each slot with a projection to retain the body in engagement with the cable entry for maintaining said gasket under compression to effect a seal.

23. An assembly as claimed in claim 22, wherein the "bayonet" slots are diametrically opposed one to another and of sufficient dimension to accommodate an assembly cable connecting block.

24. An assembly as claimed in any one of claims 2 to 23, which assembly is made of high density polyethylene or polypropylene and the support pieces and cover plates for the terminal board are made of similar material.

25. An assembly as claimed in any one of claims 22 to 24, which assembly permits quick release and withdrawal of the cables and the substitution of new ones without need to dissemble the gland assembly itself, the arrangement being such that cable entry in the junction box is configured to provide an annular upstanding part which serves to define an entry recess having a pair of opposed lugs projecting therefrom.

26. An assembly as claimed in any one of claims 22 to 25, wherein the body is provided towards its other end with an annular flange and towards its lower end with a pair of opposed bayonet slots which are either through slots or partial surface slots.

27. An assembly as claimed in any one of claims 22 to 26, wherein the bayonet slots are of a dimension sufficient to allow passage through the opening of an assembled cable end connector.

28. An assembly as claimed in any one of claims 22 to 27, wherein a blanking cable gland is employed together with its associated gasket to seal an unused cable entry.
